# EUROPÄISCHE PATENTSCHRIFT

(11) **EP 4 551 907 B1**
(45) Veröffentlichungstag und Bekanntmachung des Hinweises auf die Patenterteilung: **21.10.2026**
(21) Anmeldenummer: 23730826.7
(22) Anmeldetag: 12.06.2023
(51) Int. Cl.: G01F 5/00, G01F 15/14, G01F 15/04

(54) **VORRICHTUNG ZUR ERFASSUNG WENIGSTENS EINES PARAMETERS EINES IN EINER LEITUNG STRÖMENDEN GASFÖRMIGEN MEDIUMS**
DEVICE FOR MEASURING AT LEAST ONE PARAMETER OF A GASEOUS MEDIUM FLOWING IN A TUBE
DISPOSITIF DE MESURE D'AU MOINS UN PARAMÈTRE DE MILIEU GAZEUX S'ÉCOULANT DANS UN TUBE

(30) Priorität: 08.07.2022 DE 102022206990
(43) Veröffentlichungstag der Anmeldung: 14.05.2025
(73) Patentinhaber: Robert Bosch GmbH, 70442 Stuttgart (DE)
(72) Erfinder: KELLER, Michael, 72658 Bempflingen (DE); SHENOY, Varun, Bangalore, Karantaka 560087 (IN); KUKUSCHKIN, Kristina, 71522 Backnang, Maubach (DE)
(86) Internationale Anmeldenummer: PCT/EP2023/065581
(87) Internationale Veröffentlichungsnummer: WO 2024/008393

(56) Entgegenhaltungen:
- DE-A1- 102018 219 729
- JP-A- 2010 112 297
- JP-A- 2017 194 321
- JP-A- H11 107 843

## Beschreibung

### Stand der Technik

Aus dem Stand der Technik sind zahlreiche Vorrichtungen zur Erfassung wenigstens eines Parameters eines strömenden gasförmigen Mediums, insbesondere einer Ansaugluftmasse einer Brennkraftmaschine oder eines Brennstoffzellensystems bekannt. Bei dem Parameter kann es sich um eine physikalisch und/oder chemisch messbare Eigenschaften handeln, welche das strömende gasförmige Medium qualifiziert oder quantifiziert. Insbesondere kann es sich dabei um eine Strömungsgeschwindigkeit und/oder einen Massenstrom und/oder einen Volumenstrom handeln.

Beispielsweise sind in der Automobilindustrie seit geraumer Zeit Heißfilmluftmassenmesser zur Erfassung der Ansaugluftmasse, beispielsweise aus Konrad Reif (Hrsg.), Sensoren im Kraftfahrzeug, 1. Aufl. 2010, Seiten 146-148, bekannt. Derartige Heißfilmluftmassenmesser basieren in der Regel auf einem Sensorchip, insbesondere einem Silizium-Sensorchip, mit einer Messoberfläche, welche von dem strömenden fluiden Medium überströmbar ist. Der Sensorchip umfasst in der Regel mindestens ein Heizelement sowie mindestens zwei Temperaturfühler, welche beispielsweise auf der Messoberfläche des Sensorchips angeordnet sind. Aus einer Asymmetrie des von den Temperaturfühlern erfassten Temperaturprofils, welches durch die Strömung des fluiden Mediums beeinflusst wird, kann auf einen Massenstrom und/oder Volumenstrom des fluiden Mediums geschlossen werden. Heißfilmluftmassenmesser sind üblicherweise als Steckfühler ausgestaltet, welcher fest oder austauschbar in ein Strömungsrohr einbringbar ist. Beispielsweise kann es sich bei diesem Strömungsrohr um einen Rohrabschnitt in einem Ansaugtrakt einer Brennkraftmaschine oder auch eines Brennstoffzellenantriebs handeln.

Aus der DE 10 2014 218 591 A1 ist ein als Heißfilmluftmassenmesser ausgebildeter Steckfühler bekannt, der in ein Strömungsrohr einbringbar ist, wobei ein Messteil des Steckfühlers dazu bestimmt ist, in das Strömungsrohr eingebracht zu werden, wobei in dem Messteil eine Bypasskanalstruktur mit einer der Hauptströmungsrichtung zugewandten Einlassöffnung und wenigstens einer Auslassöffnung angeordnet ist, wobei die Bypasskanalstruktur einen sich an die Einlassöffnung anschließenden Einlassbereich aufweist, wobei ein Messkanal an einer Trennstelle von dem Einlassbereich abzweigt, wobei in dem Messkanal ein Sensorelement zur Bestimmung des Parameters des fluiden Mediums angeordnet ist.

Derartige Heißfilmluftmassenmesser müssen einer Vielzahl von Anforderungen genügen. Neben dem Ziel, einen Druckabfall an dem Heißfilmluftmassenmesser insgesamt durch geeignete strömungstechnische Ausgestaltungen zu verringern, besteht eine hauptsächliche Herausforderung darin, die Signalqualität sowie die Robustheit der Vorrichtungen gegenüber Kontamination durch Öl- und Wassertöpfchen sowie Ruß-, Staub- und sonstigen Festkörperpartikeln weiter zu verbessern. Im Betrieb einer derartigen Vorrichtung kann es außerdem in der Ansaugleitung zu einer hochfrequenten akustischen Störung kommen, die ihren Ursprung beispielsweise in einem an die Ansaugleitung angebundenen Abgasturbolader haben kann. Die hochfrequente Druckpulsation der Ansaugleitung kann mit der Luft in der Kanalstruktur der Vorrichtung zur Bestimmung des Parameters wechselwirken und dort eine nachteilige Resonanzschwingung hervorrufen. Die Resonanzschwingung ist abhängig von der Geometrie der Bypasskanalstruktur des Messteils und kann bei derartigen Vorrichtungen in einem Frequenzbereich im Kiloherzbereich auftreten. Die Resonanzschwingung kann starke Schwankungen der Geschwindigkeit der im Messkanal strömenden Luft bewirken, was insgesamt dazu führen kann, dass die Vorrichtung aufgrund ihrer thermischen Trägheit den Messwert nicht richtig erfassen kann.

Zur Lösung des Problems wird in der DE 10 2018 219 729 A1 empfohlen wenigstens einen Wandabschnitt der Bypasskanalstruktur mit wenigstens einem als Helmholz-Resonator ausgebildeten Schallabsorber zu versehen. In der DE 10 2017 214 618 A1 wird empfohlen den Messkanal mit einem porösen oder schaumförmigen Material zur Dämpfung von Druck- oder Geschwindigkeitsschwankungen zu versehen.

Aus der JP 2017 194321 A ist eine Vorrichtung zur Erfassung wenigstens eines Parameters eines strömenden gasförmigen Mediums bekannt, bei der in der Hauptströmungsrichtung stromabwärts des Steckfühlers unmittelbar an einer Innenwandung der Rohrwand eine Resonatorstruktur zur Dämpfung akustischer Schwingungen angeordnet ist.

Aus der JP 2010 112297 A ist es bekannt, mehrere Resonatoren stromabwärts eines Luftmassenmessers anzuordnen.

Trotz der durch die bekannten Lösungen bewirkten Vorteile beinhalten diese noch Verbesserungspotenzial. Insbesondere können im Volumen, welches den Streckfühler umgibt, weiterhin akustische Störungen vorliegen.

### Offenbarung der Erfindung

Die Erfindung betrifft eine Vorrichtung zur Erfassung wenigstens eines Parameters eines strömenden gasförmigen Mediums, insbesondere einer Ansaugluftmasse einer Brennkraftmaschine oder eines Brennstoffzellensystems, wobei die Vorrichtung wenigstens ein Strömungsrohr und einen Steckfühler umfasst, wobei das Strömungsrohr einen Einlass, einen Auslass und eine zylindrische Rohrwand aufweist, wobei das Strömungsrohr ausgebildet ist, um das gasförmige Medium von dem Einlass zu dem Auslass in einer Hauptströmungsrichtung zu leiten, wobei der Steckfühler durch eine zwischen dem Einlass und dem Auslass angeordnete Aufnahmeöffnung der Rohrwand in das Strömungsrohr derart eingebracht ist, dass zumindest ein Messteil des Steckfühlers vollständig in das Strömungsrohr hineinragt, wobei in dem Messteil eine Bypasskanalstruktur mit einer der Hauptströmungsrichtung zugewandten Einlassöffnung und wenigstens einer Auslassöffnung angeordnet ist, wobei die Bypasskanalstruktur einen sich an die Einlassöffnung anschließenden Einlassbereich aufweist, wobei ein Messkanal an einer Trennstelle von dem Einlassbereich abzweigt, wobei in dem Messkanal ein Sensorelement zur Bestimmung des Parameters des fluiden Mediums angeordnet ist. In der Hauptströmungsrichtung stromabwärts des Steckfühlers ist unmittelbar an einer Innenwandung der Rohrwand eine Resonatorstruktur zur Dämpfung akustischer Schwingungen angeordnet. Erfindungsgemäß weist die Resonatorstruktur mehrere über den Umfang der Innenwandung verteilte Resonatoren auf, wobei jeder Resonator als Aussenkung in der Innenwandung der zylindrischen Rohrwand ausgebildet ist und sich die Tiefe der Aussenkung zumindest in der Hauptströmungsrichtung kontinuierlich ändert.

### Vorteile der Erfindung

Mit der erfindungsgemäßen Vorrichtung können störende Resonanzen in der Bypasskanalstruktur, welche die Messignalauswertung des Sensorelementes nachteilig beeinflussen, vorteilhaft durch eine Dämpfung oder Breitbanddämpfung abgeschwächt oder vermieden werden, bevor die Störungen in die Bypasskanalstruktur des Steckfühlers gelangen. Dadurch findet die Dämpfung bereits im Strömungsrohr statt und nicht erst innerhalb der Bypasskanalstruktur. Die Genauigkeit und Robustheit des Sensorsignals können dadurch vorteilhaft erhöht werden. Untersuchungen haben gezeigt, dass die sonst auftretenden Resonanzen in der Bypasskanalstruktur besonders gut bedämpft werden, wenn die Resonatorstruktur unmittelbar an einer Innenwandung der Rohrwand und in der Hauptströmungsrichtung stromabwärts des Steckfühlers angeordnet wird. Erfindungsgemäß ist jeder Resonator als einfache Aussenkung in der Innenwandung der zylindrischen Rohrwand ausgebildet, wobei sich die Tiefe der Aussenkung zumindest in der Hauptströmungsrichtung kontinuierlich ändern. Insbesondere ist es möglich, die Aussenkungen in einem parallel zur Hautströmungsrichtung verlaufenden Querschnitt keilförmig auszubilden. Vorteilhafte Ausführungsformen und Weiterbildungen der Erfindung werden durch die in den abhängigen Ansprüchen angegebenen Merkmale ermöglicht.

Die Resonatorstruktur kann besonders einfach und preiswert hergestellt werden, indem die einzelnen Resonatoren in die Innenwandung der zylindrischen Rohrwand eingelassen werden. Wenn das Strömungsrohr aus Kunststoff gefertigt wird, kann dies auf einfache Weise bereits mit der Herstellung vorzugsweise in einem Spritzgusswerkzeug erfolgen.

Gute Dämpfungsergebnisse werden erzielt, wenn alle Resonatoren geometrisch gleichartig ausgestaltet sind und/oder gleichmäßig über den Innenumfang der Rohrwand verteilt sind.

Beispielsweise kann das zylindrische Strömungsrohr eine Mittellinie aufweisen. Jede Aussenkung kann in einer Querschnittsebene des Strömungsrohrs, welche die Mittellinie und die jeweilige keilförmige Aussenkungen schneidet, ein dem Einlass des Strömungsrohres zugewandtes erstes Ende und ein dem Auslass des Strömungsrohres zugewandtes zweites Ende aufweisen, wobei sich die Tiefe der Aussenkung von dem ersten Ende zu dem zweiten Ende kontinuierlich vergrößert.

In einem vorteilhaften Ausführungsbeispiel sind die Resonatoren am Rand der zylindrischen Rohrwand des Strömungsrohres unmittelbar vor dem Auslass angeordnet. Insbesondere kann jede Aussenkung an ihrem zweiten Ende zum Auslass des Strömungsrohrs hin offen ausgebildet sein.

Vorteilhaft ist die Resonatorstruktur für eine Dämpfung akustischer Schwingungen im Frequenzbereich zwischen 18 kHz bis 24 kHz ausgelegt. Diese Dämpfung hat sich als vorteilhaft erwiesen für einen Steckfühler, dessen Bypasskanalstruktur einen an einer Trennstelle von dem Einlassbereich abzweigenden Messkanal aufweist.

### Kurze Beschreibung der Zeichnungen

Nachfolgend werden mögliche Ausführungsformen der Erfindung unter Bezugnahme auf die beiliegende Zeichnung erläutert. In der Zeichnung zeigen:
- Fig. 1: einen schematischen Querschnitt durch ein erstes Ausführungsbeispiel der erfindungsgemäßen Vorrichtung zur Erfassung eines Parameters eines strömenden Mediums,
- Fig. 2: eine vergrößerte Detailansicht auf den stromabwärtigen Auslass des in Fig. 1 gezeigten Strömungsrohrs.

### Ausführungsformen der Erfindung

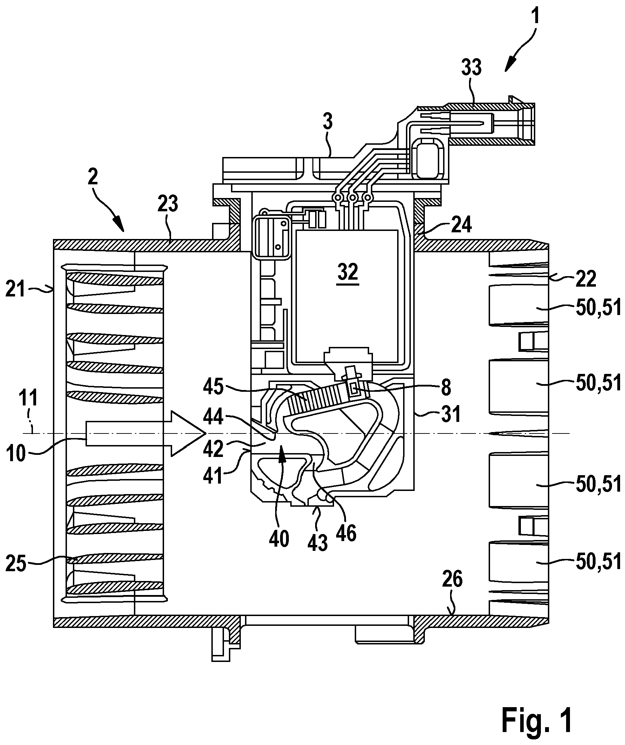

Fig. 1 zeigt einen schematischen Querschnitt durch ein erstes Ausführungsbeispiel einer erfindungsgemäßen Vorrichtung zur Erfassung eines Parameters eines strömenden Mediums. Die Vorrichtung 1 weist ein Strömungsrohr 2 und einen in das Strömungsrohr 2 eingebrachten Steckfühler 3 auf. Das Strömungsrohr 2 ist zylinderförmig um eine Mittelachse 11 ausgebildet, und weist an einem Ende einen Einlass 21 und an seinem von dem Einlass abgewandten Ende einen Auslass 22 auf. Einlass und Auslass können als kreisförmige Öffnungen an den jeweiligen Stirnseiten des Strömungsrohres 2 ausgebildet sein. Das Strömungsrohr 2 kann hinter dem Einlass 21 und stromaufwärts des Steckfühlers 3 ein Strömungsgitter 25 aufweisen. Das Strömungsgitter kann dazu dienen, das Geschwindigkeitsprofil der Strömung in dem Strömungsrohr zu vergleichmäßigen und einen Drall aus der Strömung zu nehmen.

Das Strömungsrohr 2 ist dazu ausgebildet, ein gasförmiges Medium von dem Einlass 21 zu dem Auslass 22 in einer Hauptströmungsrichtung 10 zu leiten. Unter einer Hauptströmungsrichtung wird eine Strömungsrichtung verstanden, in welcher das strömende Gas von dem Einlass 21 in Richtung des Auslasses 22 in der Hauptsache strömt, und zwar unabhängig von Wirbelbildungen der Luft, welche eine lokale Richtungsänderung des strömenden Gases bewirken können. Ebenso ist die Hauptströmungsrichtung 10 unabhängig von einer Richtungsumkehr des strömenden Gases in einer Bypasskanalstruktur 40 des Steckfühlers 3. Die Hauptströmungsrichtung 10 wird in Figur 1 durch den Pfeil angegeben.

Das Strömungsrohr 2 kann insbesondere als Leitungsabschnitt in einer Ansaugleitung einer Brennkraftmaschine oder einer Brennstoffzelle vorgesehen sein. Dabei strömt Luft durch das Strömungsrohr von dem Einlass 21 in der Hauptströmungsrichtung 10 zu dem Auslass 22 und von dort weiter zu Brennkraftmaschine oder Brennstoffzelle. Hinter dem Auslass 22 kann der Verdichterteil eines Turboladers angeordnet sein, welcher die aus dem Auslass austretende Luft verdichtet, bevor sie der Brennkraftmaschine oder Brennstoffzelle zugeführt wird. Je nach Betriebszustand der Brennkraftmaschine oder der Brennstoffzelle, kann auch eine Rückströmung in dem Strömungsrohr 2 entstehen (beispielsweise beim Abschalten einer Brennkraftmaschine). In diesem Falls strömt die Luft entgegen der Hauptströmungsrichtung 10 vom Auslass 22 in Richtung des Einlasses 21.

Das Strömungsrohr 2 weist eine zylindrische Rohrwand 23 mit einer Innenwandung 26 auf. An einer Umfangsfläche der Rohrwand ist eine Aufnahmeöffnung 24 zwischen dem Einlass 21 und dem Auslass 22 vorgesehen, durch die der Steckfühler 3 in das Strömungsrohr 2 eingesteckt werden kann.

Der Steckfühler 3 weist einen Elektronikteil 32 mit einem Steckerteil 33 und einen sich in der Steckrichtung an den Elektronikteil 32 anschließenden Messteil 31 auf. Der Steckfühler 3 wird zumindest so weit in das Strömungsrohr eingesteckt, dass der Messteil 21 vollständig in dem Strömungsrohr 2 angeordnet ist, während der elektrische Steckerteil 33 des Steckfühlers 3 außerhalb des Strömungsrohrs 2 für den Anschluss an beispielsweise ein Steuergerät angeordnet wird.

Wie in Figur 1 gut zu erkennen ist, ist in dem Messteil 31 eine Bypasskanalstruktur 40 mit einer der Hauptströmungsrichtung 10 zugewandten Einlassöffnung 41 und wenigstens einer Auslassöffnung 43 angeordnet. Die Bypasskanalstruktur 40 kann einen sich an die Einlassöffnung 41 anschließenden Einlassbereich 42 aufweisen. Eine vorspringende Nase im Eingangsbereich 42 kann als Trennstelle 44 dienen.

Die durch die Einlassöffnung 41 eintretende Strömung wird an der Trennstelle 44 aufgeteilt, in einen ersten Teilstrom, welcher nach einer Fliehkraftumlenkung an der Trennstelle 44 in einen von dem Einlassbereich 42 abzweigenden Messkanal 45 eintritt und einen zweiten Teilstrom, der an der Trennstelle 44 in einen stromabwärtigen Bereich des Einlassbereichs 42 gelangt und dort in einen Verbindungskanal 46 eintritt, der den Einlassbereich 42 mit dem stromabwärtigen Teil des Messkanals 45 verbindet. Der in den Messkanal eingetretene Teilstrom strömt über ein mit dem Elektronikteil 32 elektrisch verbundenes Sensorelement 8, welches vorzugsweise als Silizium-Sensorship, insbesondere als Heißfilmluftmassenmesser ausgebildet ist, in Richtung Auslassöffnung 43. Vor der Auslassöffnung 43 vereinigen sich die beiden Teilströme aus dem Verbindungskanal 46 und dem Messkanal. In anderen Ausführungsbeispielen kann der Verbindungskanal 46 auch eine eigene Auslassöffnung getrennt von der Auslassöffnung des Messkanals 45 aufweisen.

Im Betrieb der Vorrichtung 1 können nachteilige akustische Schwingungen auftreten, die sich als störende Resonanzen in der Bypasskanalstruktur bemerkbar machen und die Messsignalauswertung des Sensorelementes 8 nachteilig beeinflussen. Die störenden hochfrequenten akustischen Schwingungen können insbesondere durch einen Turbolader hervorgerufen werden und sich über den Auslass 22 in dem Strömungsrohr 2 ausbereiten. Aber auch andere Ursachen sind möglich. Von dem Auslass 22 aus können die Schwingungen in die Bypasskanalstruktur 40 eindringen und dort die störenden Resonanzschwingungen bewirken. Diese akustischen Schwingungen liegen im Frequenzbereich zwischen 18 kHz bis 24 kHz.

Zur Dämpfung dieser akustischen Schwingungen ist in der Hauptströmungsrichtung 10 gesehen stromabwärts des Steckfühlers 3 eine Resonanzstruktur 50 unmittelbar an der Innenwandung 26 der Rohrwand 23 des Strömungsrohres 2 ausgebildet. Die direkt in oder an der Innenwandung 26 ausgebildete Resonanzstruktur 50 weist mehrere über den Umfang der Innenwandung 26 verteilte Resonatoren 51 auf. Durch die Schwingungsanregungen der Luft in den Resonatoren 51 wird Energie absorbiert und die akustischen Schwingungen im Strömungsrohr 2 gedämpft. Dies erfolgt, indem die in der Oszillation enthaltene Energie zur Anregung des Schallabsorbers in der Eigenfrequenz aufgewandt wird. Dadurch wird diese Energie in dem Schallabsorber in Wärme umgewandelt und letztlich absorbiert.

Die Resonatoren 51 können in die Innenwandung 26 der zylindrischen Rohrwand 23 eingelassen sein. Vorzugsweise ist jeder Resonator 51 als Aussenkung 54 in der Innenwandung 26 der zylindrischen Rohrwand 23 ausgebildet. Die Resonatoren 51 können, wie dargestellt, alle geometrisch gleichartig ausgestaltet und/oder gleichmäßig über den Innenumfang der Rohrwand 23 verteilt sein.

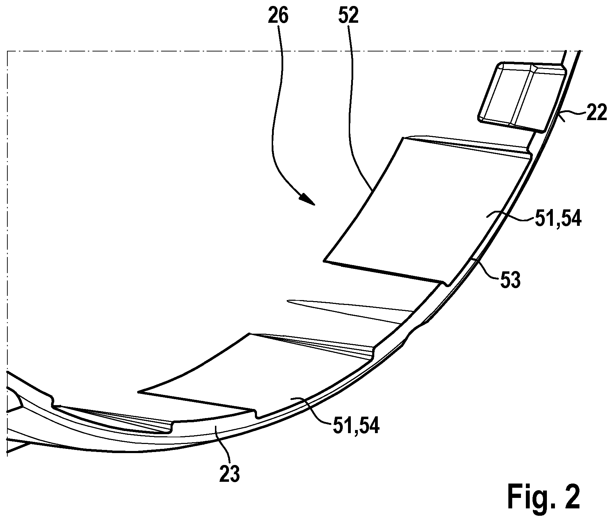

Figur 2 zeigt eine vergrößerte Detailansicht auf den stromabwärtigen Auslass 22 des in Fig. 1 gezeigten Strömungsrohrs 2. In Figur 2 ist gut zu erkennen, dass sich die Tiefe der Aussenkungen 54 zumindest in der Hauptströmungsrichtung 10 kontinuierlich ändert. Dabei sind die Aussenkungen 54 jeweils in einem parallel zur Hautströmungsrichtung 10 verlaufenden Querschnitt keilförmig ausgebildet. Jede Aussenkung 54 weist in einer Querschnittsebene des Strömungsrohrs 2, welche die Mittellinie 11 in Figur 1 und die jeweilige keilförmige Aussenkungen 54 schneidet, ein dem Einlass 21 des Strömungsrohres 2 zugewandtes erstes Ende 52 und ein dem Auslass 22 des Strömungsrohres 2 zugewandtes zweites Ende 23 auf. Wie in Figur 2 gut erkennbar ist, vergrößert sich die Tiefe jeder Aussenkung 54 von dem ersten Ende 52 zu dem zweiten Ende 53 kontinuierlich. Die Resonatoren 51 können am Rand der zylindrischen Rohrwand 23 des Strömungsrohres 2 unmittelbar vor dem Auslass 22 angeordnet sein. Dadurch ist es möglich, dass jede Aussenkung 54 an ihrem zweiten Ende 23 zum Auslass 22 des Strömungsrohrs 2 hin offen ausgebildet ist.

Die oben beschriebene Ausgestaltung der an der Innenwandung 26 ausgebildeten Resonatorstruktur 50 ist nur beispielhaft. Auch andere Ausgestaltungen sind selbstverständlich möglich, wobei Anzahl, Form und Größe der in die Innenwandung 26 eingelassenen Resonatoren 51 verändert werden kann. Wichtig ist, dass die Resonatoren stromabwärts des Steckfühlers in einer Umfangslinie über die Innenwandung 26 des Strömungsrohrs 2 verteilt in der Innenwandung 26 ausgebildet sind.

## Patentansprüche

1. Vorrichtung (1) zur Erfassung wenigstens eines Parameters eines strömenden gasförmigen Mediums, insbesondere einer Ansaugluftmasse einer Brennkraftmaschine oder eines Brennstoffzellensystems, wobei die Vorrichtung (1) wenigstens ein Strömungsrohr (2) und einen Steckfühler (3) umfasst, wobei das Strömungsrohr (2) einen Einlass (21), einen Auslass (22) und eine zylindrische Rohrwand (23) aufweist, wobei das Strömungsrohr (2) ausgebildet ist, um das gasförmige Medium von dem Einlass (21) zu dem Auslass (22) in einer Hauptströmungsrichtung (10) zu leiten, wobei der Steckfühler (3) durch eine zwischen dem Einlass (21) und dem Auslass (22) angeordnete Aufnahmeöffnung (24) der Rohrwand (23) in das Strömungsrohr (2) derart eingebracht ist, dass zumindest ein Messteil (31) des Steckfühlers vollständig in das Strömungsrohr (2) hineinragt, wobei in dem Messteil (31) eine Bypasskanalstruktur (40) mit einer der Hauptströmungsrichtung (10) zugewandten Einlassöffnung (41) und wenigstens einer Auslassöffnung (43) angeordnet ist, wobei die Bypasskanalstruktur (40) einen sich an die Einlassöffnung (41) anschließenden Einlassbereich (42) aufweist, wobei ein Messkanal (45) an einer Trennstelle (44) von dem Einlassbereich (42) abzweigt, wobei in dem Messkanal (45) ein Sensorelement (8) zur Bestimmung des Parameters des fluiden Mediums angeordnet ist, wobei in der Hauptströmungsrichtung (10) stromabwärts des Steckfühlers (3) unmittelbar an einer Innenwandung (26) der Rohrwand (23) eine Resonatorstruktur (50) zur Dämpfung akustischer Schwingungen angeordnet ist, **dadurch gekennzeichnet, dass** die Resonatorstruktur (50) mehrere über den Umfang der Innenwandung (26) verteilten Resonatoren (51) aufweist und jeder Resonator (51) als Aussenkung (54) in der Innenwandung (26) der zylindrischen Rohrwand (23) ausgebildet ist, wobei sich die Tiefe der Aussenkung (54) zumindest in der Hauptströmungsrichtung (10) kontinuierlich ändert.

2. Vorrichtung nach Anspruch 1, **dadurch gekennzeichnet, dass** die Resonatoren (51) in die Innenwandung (26) der zylindrischen Rohrwand (23) eingelassen sind.

3. Vorrichtung nach Anspruch 1 oder 2, **dadurch gekennzeichnet, dass** alle Resonatoren (51) geometrisch gleichartig ausgestaltet sind und/oder gleichmäßig über den Innenumfang der Rohrwand (23) verteilt sind.

4. Vorrichtung nach Anspruch 1, **dadurch gekennzeichnet, dass** die Aussenkungen (54) in einem parallel zur Hautströmungsrichtung (10) verlaufenden Querschnitt keilförmig ausgebildet sind.

5. Vorrichtung nach Anspruch 1 oder 4, **dadurch gekennzeichnet, dass** das Strömungsrohr (2) eine Mittellinie (11) aufweist, und dass jede Aussenkung (54) in einer Querschnittsebene des Strömungsrohrs (2), welche die Mittellinie (11) und die jeweilige keilförmige Aussenkungen (54) schneidet, ein dem Einlass (21) des Strömungsrohres (2) zugewandtes erstes Ende (52) und ein dem Auslass (22) des Strömungsrohres (2) zugewandtes zweites Ende (23) aufweist, wobei sich die Tiefe der Aussenkung (54) von dem ersten Ende (52) zu dem zweiten Ende (53) kontinuierlich vergrößert.

6. Vorrichtung nach einem der vorstehenden Ansprüche, **dadurch gekennzeichnet, dass** die Resonatoren (51) am Rand der zylindrischen Rohrwand (23) des Strömungsrohres (2) unmittelbar vor dem Auslass (22) angeordnet sind.

7. Vorrichtung nach Anspruch 5 und 6, **dadurch gekennzeichnet, dass** jede Aussenkung (54) an ihrem zweiten Ende (23) zum Auslass (22) des Strömungsrohrs (2) hin offen ausgebildet ist.

8. Vorrichtung nach einem der vorstehenden Ansprüche, **dadurch gekennzeichnet, dass** die Resonatorstruktur (50) für eine Dämpfung akustischer Schwingungen im Frequenzbereich zwischen 18 kHz bis 24 kHz ausgelegt ist.

## Claims

1. Device (1) for measuring at least one parameter of a flowing gaseous medium, in particular an intake air mass of an internal combustion engine or of a fuel cell system, wherein the device (1) comprises at least one flow tube (2) and a plug-in sensor (3), wherein the flow tube (2) has an inlet (21), an outlet (22) and a cylindrical tube wall (23), wherein the flow tube (2) is designed to conduct the gaseous medium from the inlet (21) to the outlet (22) in a main flow direction (10), wherein the plug-in sensor (3) is introduced into the flow tube (2) through a receiving opening (24) arranged between the inlet (21) and the outlet (22) in the tube wall (23) in such a way that at least one measuring part (31) of the plug-in sensor projects completely into the flow tube (2), wherein a bypass channel structure (40) with an inlet opening (41) facing the main flow direction (10) and at least one outlet opening (43) is arranged in the measuring part (31), wherein the bypass channel structure (40) has an inlet region (42) adjoining the inlet opening (41), wherein a measuring channel (45) branches off from the inlet region (42) at a separation point (44), wherein a sensor element (8) for determining the parameter of the fluid medium is arranged in the measuring channel (45), wherein a resonator structure (50) for damping acoustic vibrations is arranged in the main flow direction (10) downstream of the plug-in sensor (3) directly on an inner wall (26) of the tube wall (23), **characterized in that** the resonator structure (50) has a plurality of resonators (51) distributed over the circumference of the inner wall (26), and each resonator (51) is designed as a recess (54) in the inner wall (26) of the cylindrical tube wall (23), wherein the depth of the recess (54) continuously changes at least in the main flow direction (10).

2. Device according to Claim 1, **characterized in that** the resonators (51) are embedded in the inner wall (26) of the cylindrical tube wall (23).

3. Device according to Claim 1 or 2, **characterized in that** all of the resonators (51) are geometrically identically designed and/or uniformly distributed over the inner circumference of the tube wall (23).

4. Device according to Claim 1, **characterized in that** the recesses (54) are wedge-shaped in a cross section running parallel to the main flow direction (10).

5. Device according to Claim 1 or 4, **characterized in that** the flow tube (2) has a centre line (11), and **in that** each recess (54), in a cross-sectional plane of the flow tube (2), which intersects the centre line (11) and the respective wedge-shaped recess (54), has a first end (52) facing the inlet (21) of the flow tube (2) and a second end (23) facing the outlet (22) of the flow tube (2), wherein the depth of the recess (54) continuously increases from the first end (52) to the second end (53).

6. Device according to any one of the preceding claims, **characterized in that** the resonators (51) are arranged at the edge of the cylindrical tube wall (23) of the flow tube (2) directly upstream of the outlet (22).

7. Device according to Claims 5 and 6, **characterized in that** each recess (54) is open at its second end (23) towards the outlet (22) of the flow tube (2).

8. Device according to any one of the preceding claims, **characterized in that** the resonator structure (50) is designed for damping acoustic vibrations in the frequency range between 18 kHz and 24 kHz.

## Revendications

1. Dispositif (1) pour détecter au moins un paramètre d'un milieu gazeux en écoulement, en particulier d'une masse d'air d'admission d'un moteur à combustion interne ou d'un système de pile à combustible, le dispositif (1) comprenant au moins un tube d'écoulement (2) et un capteur enfichable (3), le tube d'écoulement (2) comportant une entrée (21), une sortie (22) et une paroi de tube (23) cylindrique, le tube d'écoulement (2) étant formé pour conduire le milieu gazeux depuis l'entrée (21) à la sortie (22) dans une direction d'écoulement principale (10), le capteur enfichable (3) étant introduit dans le tube d'écoulement (2) par une ouverture de réception (24) de la paroi de tube (23), disposée entre l'entrée (21) et la sortie (22), de telle manière qu'au moins une partie de mesure (31) du capteur enfichable dépasse complètement dans le tube d'écoulement (2), une structure de canal de dérivation (40) avec une ouverture d'entrée (41) tournée vers la direction d'écoulement principale (10) et au moins une ouverture de sortie (43) étant disposée dans la partie de mesure (31), la structure de canal de dérivation (40) comportant une zone d'entrée (42) se raccordant à l'ouverture d'entrée (41), un canal de mesure (45) dérivant de la zone d'entrée (42) sur un point de séparation (41), un élément de capteur (8) destiné à déterminer le paramètre du milieu fluide étant disposé dans le canal de mesure (45), une structure de résonateur (50) destinée à amortir des vibrations acoustiques étant disposée directement sur une paroi intérieure (26) de la paroi de tube (23) en aval du capteur enfichable (3) dans la direction d'écoulement principale (10), **caractérisé en ce que** la structure de résonateur (50) comporte plusieurs résonateurs (51) répartis sur la périphérie de la paroi intérieure (26), et chaque résonateur (51) est formé comme un renfoncement extérieur (54) dans la paroi intérieure (26) de la paroi de tube (23) cylindrique, la profondeur du renfoncement extérieur (54) variant de manière continue au moins dans la direction d'écoulement principale (10).

2. Dispositif selon la revendication 1, **caractérisé en ce que** les résonateurs (51) sont pratiqués dans la paroi intérieure (26) de la paroi de tube (23) cylindrique.

3. Dispositif selon la revendication 1 ou 2, **caractérisé en ce que** tous les résonateurs (51) sont configurés avec une géométrie identique et/ou sont répartis uniformément sur la périphérie intérieure de la paroi de tube (23).

4. Dispositif selon la revendication 1, **caractérisé en ce que** les renfoncements extérieurs (54) sont formés en forme de coin dans une section transversale s'étendant parallèlement à la direction d'écoulement principale (10).

5. Dispositif selon la revendication 1 ou 4, **caractérisé en ce que** le tube d'écoulement (2) comporte une ligne médiane (11), et que chaque renfoncement extérieur (54) comporte dans un plan de section transversale du tube d'écoulement (2), qui coupe la ligne médiane (11) et les renfoncements extérieurs (54) cunéiformes respectifs, une première extrémité (52) tournée vers l'entrée (21) du tube d'écoulement (2) et une seconde extrémité (23) tournée vers la sortie (22) du tube d'écoulement (2), la profondeur du renfoncement extérieur (54) augmentant en continu depuis la première extrémité (52) à la seconde extrémité (53).

6. Dispositif selon l'une des revendications précédentes, **caractérisé en ce que** les résonateurs (51) sont disposés sur le bord de la paroi de tube (23) cylindrique du tube d'écoulement (2), directement en amont de la sortie (22).

7. Dispositif selon les revendications 5 et 6, **caractérisé en ce que** chaque renfoncement extérieur (54) est formé à sa seconde extrémité (23) de manière ouverte vers la sortie (22) du tube d'écoulement (2).

8. Dispositif selon l'une des revendications précédentes, **caractérisé en ce que** la structure de résonateur (50) est conçue pour amortir des vibrations acoustiques dans la plage de fréquences entre 18 kHz et 24 kHz.
